# FASCICULE DE BREVET EUROPEEN

(11) **EP 1 098 334 B1**
(45) Date de publication et mention de la délivrance du brevet: **14.06.2006**
(21) Numéro de dépôt: 00403071.4
(22) Date de dépôt: 06.11.2000
(51) Int. Cl.: H01H 33/53, H01H 9/52, H02B 1/56

(54) **Interrupteur de centrale avec un échangeur-radiateur**
Kraftwerksschalter mit Wärmetauscher
Power plant switch with heat exchanger

(30) Priorité: 08.11.1999 FR 9913999
(43) Date de publication de la demande: 09.05.2001
(73) Titulaire: AREVA T&D SA, 92084 Paris La Défense Cedex (FR)
(72) Inventeur: Biquez, François, 69350 Brignais (FR); Willieme, Jean-Marc, 69350 La Mulatiere (FR)
(74) Mandataire: Poulin, Gérard

(56) Documents cités:
- DE-A- 2 707 206
- FR-A- 2 203 157

## Description

L'invention porte sur un interrupteur de centrale de courant nominal élevé, comprenant une chambre de coupure contenant un gaz diélectrique sous pression et qui est montée à l'intérieur d'une gaine de protection dans laquelle passe éventuellement une circulation générale d'air de refroidissement, et un échangeur-radiateur situé à l'extérieur de ladite gaine et raccordé à ladite chambre de coupure dans lequel ledit gaz sous pression est mis en circulation permanente.

Un tel interrupteur est en particulier connu du document de brevet français n°2199182. Dans cet interrupteur connu, l'échangeur-radiateur est raccordé à la chambre de coupure par l'intermédiaire de deux isolateurs supports creux qui s'étendent radialement à partir de la chambre de coupure. D'autres isolateurs creux destinés à être mis à la terre supportent également la chambre de coupure dans la gaine. Le nombre d'isolateurs utilisés dans cet agencement est un facteur important du coût de revient de l'interrupteur.

Le but de l'invention est de proposer une solution pour réduire le coût de revient d'un tel interrupteur équipé d'un échangeur-radiateur.

A cet effet, l'invention a pour objet un interrupteur de centrale de courant nominal élevé, comprenant une chambre de coupure contenant un gaz diélectrique sous pression et qui est montée à l'intérieur d'une gaine de protection et un échangeur-radiateur situé à l'extérieur de ladite gaine et raccordé à ladite chambre de coupure dans lequel ledit gaz sous pression est mis en circulation permanente, caractérisé en ce que ledit gaz sous pression refroidi dans l'échangeur-radiateur est ramené vers la partie la plus basse de la chambre de coupure à travers un carter inférieur métallique servant de support à la gaine de protection et destiné à être mis à la terre par l'intermediaire d'un chassis métallique. Avec cet agencement, le raccordement de l'échangeur-radiateur à la chambre de coupure requiert l'utilisation d'un seul isolateur creux au lieu de deux dans l'état de la technique, ce qui réduit le coût de construction de l'interrupteur. Ce carter destiné à être mis à la terre est typiquement le carter où est installé le mécanisme d'entraînement des contacts de la chambre de coupure.

Selon un mode de réalisation particulier d'un interrupteur selon l'invention, la chambre de coupure s'étend axialement suivant une direction verticale et comporte à son extrémité la plus basse un carter inférieur métallique destiné a être mis à la terre et à son extrémité la plus haute un carter supérieur métallique raccordé audit échangeur-radiateur par un isolateur creux formant une traversée isolante. En prévoyant de disposer de façon coaxiale la tubulure de sortie de l'échangeur-radiateur raccordée au carter inférieur métallique de la chambre de coupure, le carter inférieur métallique de la chambre de coupure, le carter supérieur métallique de la chambre de coupure, l'isolateur creux formant une traversée isolante, et enfin la tubulure d'entrée de l'échangeur-radiateur raccordée à l'isolateur creux, on obtient que la circulation du gaz sous pression de la chambre de coupure vers l'échangeur-radiateur et de l'échangeur-radiateur vers la chambre de coupure suit un axe vertical, ce qui favorise la convection naturelle et donc l'échange thermique. En outre, cette disposition contribue à augmenter la hauteur de tirage de convection naturelle, ce qui favorise la vitesse de circulation du gaz sous pression dans l'échangeur-radiateur et dans la chambre de coupure.

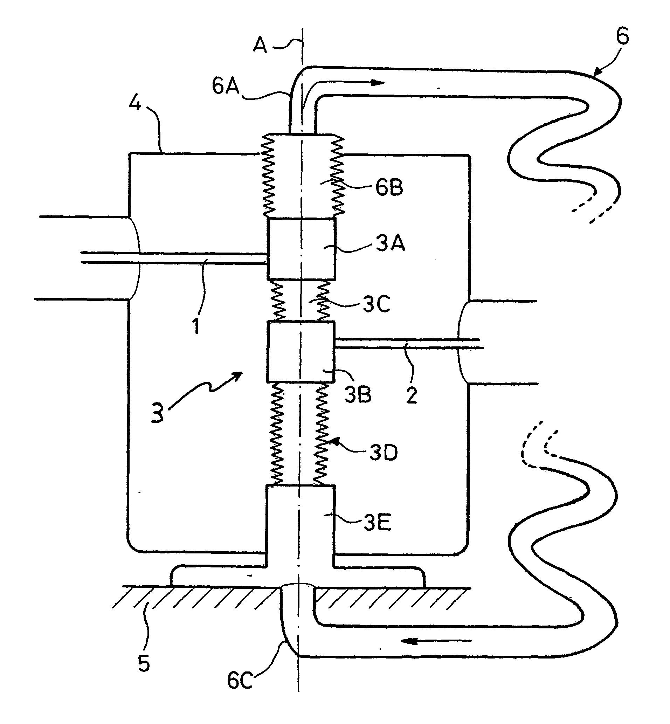

La figure unique illustre très schématiquement un interrupteur selon l'invention, vu en coupe selon un plan vertical.

Les conducteurs d'arrivée 1 et de sortie 2 de l'interrupteur sont ici disposés horizontalement alors que la chambre de coupure 3 est disposée verticalement. La chambre de coupure 3 avec les conducteurs 1,2 sont disposés dans une gaine métallique de protection 4 dans laquelle passe une circulation générale d'air de refroidissement des conducteurs 1 et 2.

La chambre de coupure comporte à son extrémité la plus haute un carter supérieur métallique 3A dans lequel est disposé notamment un contact fixe raccordé électriquement au conducteur d'arrivée 1, et un carter intermédiaire métallique 3B dans lequel est disposé notamment un contact mobile raccordé électriquement au conducteur de sortie 2. Le carter 3B est raccordé au carter 3A par un isolateur creux 3C. La chambre de coupure comporte encore à son extrémité la plus basse un carter inférieur métallique 3E dans lequel est disposé le dispositif d'entraînement du contact mobile. Le carter 3E est raccordé au carter 3B par un isolateur creux 3D. Les carters 3A,3B,3E et les isolateurs creux 3C,3D sont alignés coaxialement suivant l'axe A. Le carter 3E sert de support pour la gaine de protection 4 et est mis à la terre quand il est monté sur le châssis métallique 5 supportant l'interrupteur.

Comme visible sur la figure, l'interrupteur comprend un échangeur-radiateur 6 situé à l'extérieur de la gaine et qui comporte une tubulure d'entrée 6A raccordée coaxialement au carter supérieur 3A de la chambre de coupure par l'intermédiaire d'un isolateur creux 6B formant une traversée isolante de la gaine 4. L'isolateur creux 6B est coaxial à la tubulure d'entrée 6A et au carter 3A. L'échangeur-radiateur 6 comporte également une tubulure de sortie 6C qui est raccordée directement et coaxialement sous le carter inférieur 3E de la chambre de coupure. Le gaz diélectrique, par exemple du SF6, sous pression de quelques bars dans la chambre de coupure circule par convection naturelle dans l'échangeur-radiateur 6 comme représenté par les flèches, le gaz refroidi en sortie de l'échangeur étant ramené directement dans la chambre de coupure par un évidement à travers le carter 3E. A travers la chambre de coupure 3, la circulation du gaz sous pression suit l'axe vertical A entre les tubulures de sortie 6C et d'entrée 6A de l'échangeur-radiateur.

Le raccordement direct de la tubulure de sortie 6C de l'échangeur-radiateur au carter métallique 3E de la chambre de coupure mis à la terre peut parfaitement être réalisé dans une configuration d'interrupteur où la chambre de coupure est disposée inclinée par rapport à l'horizontale.

## Revendications

1. Un interrupteur de centrale de courant nominal élevé, comprenant une chambre de coupure (3) montée à l'intérieur d'une gaine de protection (4) et contenant un gaz diélectrique sous pression mis en circulation permanente, comprenant aussi un échangeur-radiateur (6) situé à l'extérieur de ladite gaine et raccordé à ladite chambre de coupure pour faire circuler et refroidir ledit gaz diélectrique, **caractérisé en ce que** la chambre de coupure comporte à son extrémité la plus basse un carter inférieur métallique (3E) servant de support à la gaine de protection (4) et permettant le passage du gaz diélectrique refroidi dans l'échangeur-radiateur vers l'extrémité basse de ladite chambre de coupure, legt carter inférieur métallique étant destiné à être mis à la terre par l'intermédiaire d'un chassis métallique (5).

2. L'interrupteur selon la revendication 1, dans lequel la chambre de coupure (3) s'étend axialement suivant une direction verticale (A) et comporte à son extrémité la plus haute un carter supérieur métallique (3A) raccordé audit échangeur-radiateur par un isolateur creux (6B) formant une traversée isolante de la gaine de protection (4), et dans lequel le carter inférieur métallique (3E) et le carter supérieur métallique (3A) sont disposés coaxiaux à ladite chambre.

## Claims

1. A power station switch having high nominal current, the switch comprising a break chamber (3) mounted inside a protective sheath (4) and containing a dielectric gas under pressure put into continuous circulation, the switch also comprising a radiator/heat exchanger (6) situated outside said sheath and connected to said break chamber to cause said dielectric gas to circulate and to cool it, **characterized in that** the break chamber has a bottom metal case (3E) serving as a support for the protective sheath (4) at its lower end enabling the dielectric gas cooled in the radiator/heat exchanger to pass towards the low end of said break chamber, said bottom metal case being designed to be grounded or earthed by means of a metal frame (5).

2. The switch of claim 1, in which the break chamber (3) extends axially in a vertical direction (A) and has at its top end a top metal case (3A) connected to said radiator/heat exchanger via a hollow insulator (6B) forming an insulating bushing of the protective sheath (4), and in which the bottom metal case (3E) and the top metal case (3A) are disposed coaxially to said chamber.

## Patentansprüche

1. Schalter einer Zentrale mit erhöhtem Nennstrom, mit einer Trennkammer (3), die im Inneren einer Schutzhülle (4) angebracht ist und ein druckbeaufschlagtes, in permanente Zirkulation versetztes dielektrisches Gas enthält, sowie mit einem Tauscher-Kühler (6), der sich außerhalb der Hülle befindet und mit der Trennkammer verbunden ist, um das dielektrische Gas zirkulieren zu lassen und zu kühlen,
**dadurch gekennzeichnet, dass** die Trennkammer an ihrem untersten Ende ein unteres metallisches Gehäuse (3E) aufweist, das der Schutzhülle (4) als Halterung dient und das den Durchgang des gekühlten dielektrischen Gases in dem Tauscher-Kühler zu dem unteren Ende der Trennkammer ermöglicht, wobei das untere metallische Gehäuse dazu vorgesehen ist, über ein metallisches Chassis (5) geerdet zu werden.

2. Schalter nach Anspruch (1), wobei sich die Trennkammer (3) axial in einer Vertikalrichtung A erstreckt und an ihrem obersten Ende ein oberes metallisches Gehäuse (3A) aufweist, das mit dem Tauscher-Kühler über einen hohlen Isolator (6B) verbunden ist, der einen isolierenden Übergang von der Schutzhülse (4) bildet, und wobei das untere metallische Gehäuse (3E) und das obere metallische Gehäuse (3A) koaxial zu der Kammer angeordnet sind.
